# EUROPEAN PATENT SPECIFICATION

(11) **EP 1 724 897 B1**
(45) Date of publication and mention of the grant of the patent: **12.05.2010**
(21) Application number: 06252602.5
(22) Date of filing: 18.05.2006
(51) Int. Cl.: H02G 3/12

(54) **Improvements in and relating to intumescent gaskets**
Verbesserte intumeszierende Dichtungen
Amélioration de joints intumescents

(30) Priority: 18.05.2005 GB 0510130
(43) Date of publication of application: 22.11.2006
(73) Proprietor: Environmental Seals Ltd., Nr. Dover Kent CT15 7JG (GB)
(72) Inventor: Ward, Derek, Maydensole, Dover, Kent CT15 5HR (GB)
(74) Representative: Sayer, Robert David

(56) References cited:
- DE-U1-202004 011 259
- GB-A- 2 297 609
- GB-A- 2 316 467
- GB-A- 2 345 125

## Description

The present invention relates to intumescent gaskets and more especially to intumescent gaskets with acoustic properties for use with conventional dry lining boxes.

The present invention sets out to provide an improved intumescent gasket which provides fire protection and acoustic properties to *inter alia* a dry lining box over which it is located.

According to one aspect there is provided a gasket for *inter alia* a dry lining box, the gasket comprising a base with upstanding walls, the base and side walls being formed form sponge material, an internal surface of the base having intumescent material thereon.

Preferably, a layer of intumescent material is located or otherwise formed on the base.

Preferably the layer is retained on the base using suitable adhesive.

One embodiment of the invention will now be described, by way of example, with reference to the accompanying drawings in which :

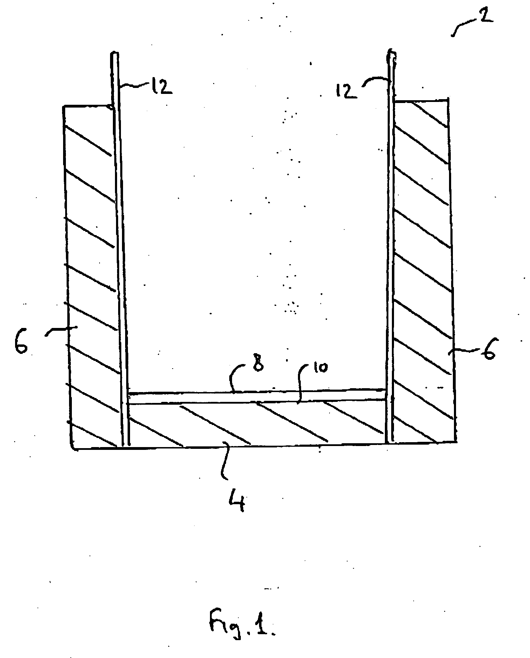

Figure 1 is a side view in cross-section of a gasket constructed in accordance with the present invention; and

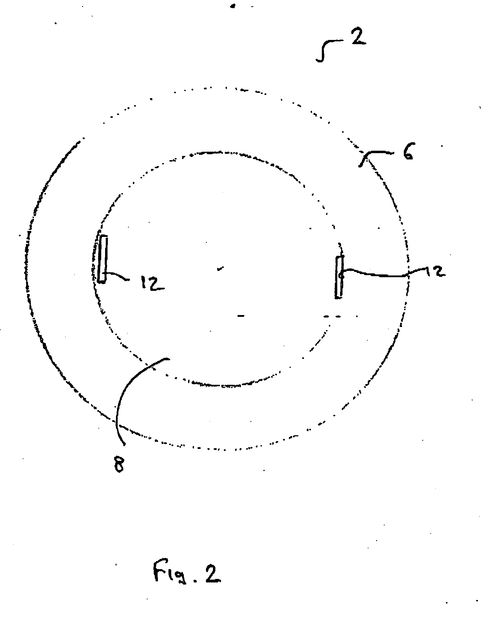

Figure 2 is a plan view from above of the gasket of Figure 1.

Referring to the Figures, a gasket 2 is generally of circular channel section having a base 4 and upstanding side wall 6. The base 4 is made from sponge or sponge-like material, having a width of around 10 to 15 mm. The side wall 6 is also made from sponge or sponge-like material having a width of around 15 mm. Typically, the internal diameter of the gasket 2 is around 80 mm and the external diameter around 110 mm. Typically, the internal height of the gasket 2 is around 35 mm and the external height is around 50 mm.

The sizes are provided only as an example and is clearly envisaged that the gasket 2 can be made to any suitable size or shape to accommodate the dry lining box over which the gasket 2 is to be located.

A layer of intumescent material 8 is formed or otherwise located on an internal surface 10 of the base 4. The intumescent material layer 8 is retained against the base 4 using suitable adhesive.

In an alternative embodiment (not shown) the base 4 is impregnated with intumescent material at least some of which is present on the internal surface 10 of the base 4. The side wall 6 may also be similarly impregnated with intumescent material.

Two frame members 12 extend upwardly from the internal surface of the side wall 6 of the gasket 2 to allow the gasket to mounted into a ceiling in a conventional way around a dry lining box.

The sponge material of the base 4 and side walls 6 of the gasket 2 provide acoustic protection to the dry lining box around which the gasket is located in use.

In the event of fire, the gasket burns to form a seal and the intumescent material rapidly expands to retain the dry lining box in place.

In a further embodiment, the base 4 and side wall 6 of the gasket 2 are made of a preformed flexible cellular fire-retardant sponge such as that disclosed in the Applicant's earlier Patent No. GB 2359265 which is incorporated herein by reference. The sponge disclosed therein has a surface coated firstly with a primer solution including a sealant and secondly with a flowable coating of fire-retardant material.

The above described embodiments has been given by way of example only, and the skilled reader will naturally appreciate that many variations could be made thereto without departing from the scope of the present invention.

## Claims

1. A gasket for *inter alia* a dry lining box, the gasket comprising a base with upstanding side walls, the base and side walls being formed from sponge material, and an internal surface of the base having intumescent material thereon.

2. A gasket according to claim 1, wherein a layer of intumescent material is located on the base of the gasket.

3. A gasket according to claim 2, wherein the layer is retained on the base using adhesive.

4. A gasket according to claim 1, wherein the base of the gasket is impregnated with intumescent material.

5. A gasket according to any preceding claim, wherein sponge material is made of a preformed flexible cellular fire-retardant sponge.

6. A gasket according to claim 5, wherein the sponge has a surface firstly coated witha primer solution including a sealant and secondly with a flowable coating of fire-retardant material.

## Patentansprüche

1. Dichtung für unter anderem eine Hohlwanddose, wobei die Dichtung eine Basis mit aufrechten Seitenwänden umfasst, wobei die Basis und die Seitenwände aus Schwammmaterial gebildet sind und eine Innenfläche der Basis intumeszierendes Material darauf aufweist.

2. Dichtung nach Anspruch 1, wobei eine Schicht aus intumeszierendem Material sich auf der Basis der Dichtung befindet.

3. Dichtung nach Anspruch 2, wobei die Schicht unter Verwendung von Klebstoff auf der Basis gehalten wird.

4. Dichtung nach Anspruch 1, wobei die Basis der Dichtung mit intumeszierendem Material imprägniert ist.

5. Dichtung nach einem der vorhergehenden Ansprüche, wobei das Schwammmaterial aus einem vorgeformten, flexiblen, zelligen, feuerfesten Schwamm hergestellt ist.

6. Dichtung nach Anspruch 5, wobei der Schwamm eine Oberfläche aufweist, die zuerst mit einer Grundierlösung, die ein Dichtmittel enthält, und zweitens mit einem fließfähigen Überzug aus feuerfestem Material beschichtet ist.

## Revendications

1. Joint statique pour boîte de dérivation à encastrer pour cloisons sèches entre autres, le joint statique comprenant une base avec des parois latérales verticales, la base et les parois latérales étant formées de matière éponge, et une surface interne de la base ayant un matériau intumescent sur elle.

2. Joint statique selon la revendication 1, dans lequel une couche de matériau intumescent est située sur la base du joint statique.

3. Joint statique selon la revendication 2, dans lequel la couche est retenue sur la base en utilisant de l'adhésif.

4. Joint statique selon la revendication 1, dans lequel la base du joint statique est imprégnée de matériau intumescent.

5. Joint statique selon l'une quelconque des revendications précédentes, dans lequel la matière éponge est constituée d'une éponge préformée flexible cellulaire ignifuge.

6. Joint statique selon la revendication 5, dans lequel l'éponge possède une surface d'abord enduite d'une solution primaire incluant un produit d'étanchéité, puis d'un revêtement liquide de matériau ignifuge.
